# EUROPEAN PATENT APPLICATION

(11) **EP 1 575 268 A2**
(43) Date of publication of application: **14.09.2005**
(21) Application number: 05101474.4
(22) Date of filing: 25.02.2005
(51) Int. Cl.: H04N 5/225, G03B 17/02

(54) **A camera apparatus with removable grip**

(30) Priority: 10.03.2004 KR 2004016039
(71) Applicant: SAMSUNG ELECTRONICS CO., LTD., Gyeonggi-Do 442-742 (KR)
(72) Inventor: LEE, Chang-hee, Gyeonggi-do (KR); KIM, Nam-il, Gyeonggi-do (KR)
(74) Representative: Geary, Stuart Lloyd

(57) **Abstract**

An image photographing apparatus having a grip cover and a grip cover mount part on a deck door, for mounting the grip cover. The apparatus comprises a prominence, a depression and a hook on the grip cover, for holding the apparatus. An adjustment hole is configured on the grip cover mount part to releasably engage the grip cover with the hook and adjust a travel system adjustment member.

## Description

The present invention relates to a camera apparatus comprising a body.

Image photographing apparatuses, such as camcorders and digital cameras, are widely used. A camcorder has a deck unit for recording and playing back images and/or sounds of objects which have been photographed to a recording media such as a magnetic tape. The deck unit has a travel system for the magnetic tape as well as a head drum.

In operation, the user holds the camcorder in one hand during capture of an image. Thus, the camcorder becomes tiresome if used for an extended period of time. Therefore, it is important to increase comfort. A drawback of known camcorders is inadequate surfaces for grip. In particular, the user often perspires whilst holding the camcorder which causes discomfort.

Another problem with known camcorders, is that components are often difficult to access. For example, when the assembly of the camcorder is complete, the travel system requires adjusting. More specifically, posture and height of a guide pole or guide roller which controls the travel of the tape should be adjusted. In order to effect adjustment, a hole is necessary allowing access to a the travel system adjustment member. The travel system is adjusted using the adjustment member. Following adjustment, the hole is closed by a packing made of a material such as rubber. However, as the rubber packing is exposed, the aesthetics of the camcorder are reduced. Furthermore, material is wasted. As the rubber packing is press-fitted, the user cannot remove the rubber packing. Therefore, adjustment of the travel system by the user is not possible.

Therefore, a need exists for a camcorder having an improved structure to eliminate discomfort as well as a magnetic tape travel system adjustment member which is improved both operationally and aesthetically.

Accordingly, embodiments of the present invention have been conceived to address the above-mentioned problems occurring in the prior art, and an aspect of the present invention is to provide an image photographing apparatus having a developed structure for improving a user's comfort, the aesthetics of the apparatus, and facilitating adjustment of the magnetic tape travel system.

The present invention relates to a camera apparatus comprising a body.

A camera apparatus according to the present invention is characterised by a removable grip arranged to be in contact with the palm of a user's hand during operational use of the camera.

Additional preferred and optional features are set forth in claims 2, 3 and 4 appended hereto.

An embodiment of the present invention will now be described, by way of example only, and with reference to the accompanying drawings, in which:
Figure 1 is a perspective view of a camcorder in accordance with an embodiment of the present invention;
Figure 2 is a perspective view of a grip cover attached to the camcorder of Figure 1;
Figure 3 is a cross-sectional view of line I-I of Figure 1;
Figure 4 is a perspective view of the image photographing apparatus as shown in Figure 1, showing a deck unit;
Figure 5 is a perspective view of the camcorder of Figure 1, with the deck door open.

Throughout the drawings, the same drawings reference numerals will be understood to refer to the same elements, features, and structures.

Also, descriptions of well-known functions and constructions are omitted for conciseness.

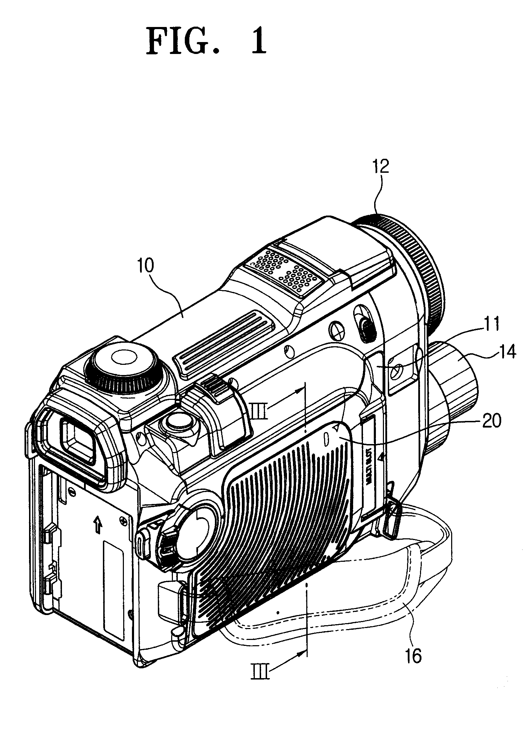

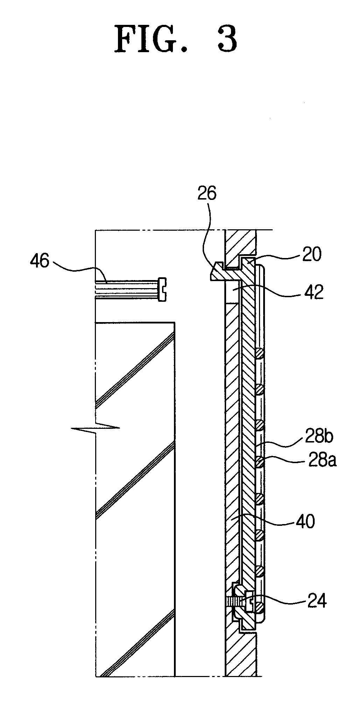

Referring to Figures 1 to 4, a dual cam according to an embodiment of the present invention comprises a main body 10, a grip cover 20 and a deck door 11.

The main body 10 comprises a first camera unit 12 (hereinafter called as a camcorder unit), a second camera unit 14 (hereinafter called a digital camera unit) and a holding band 16.

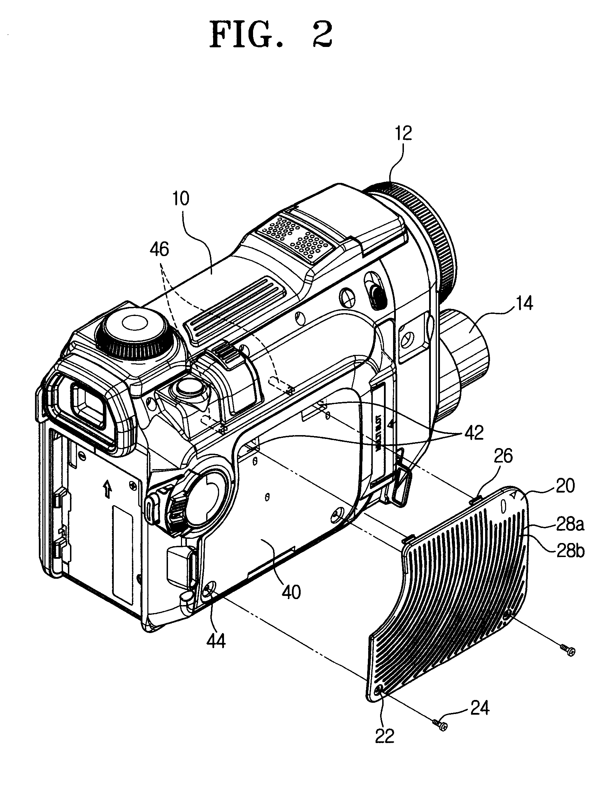

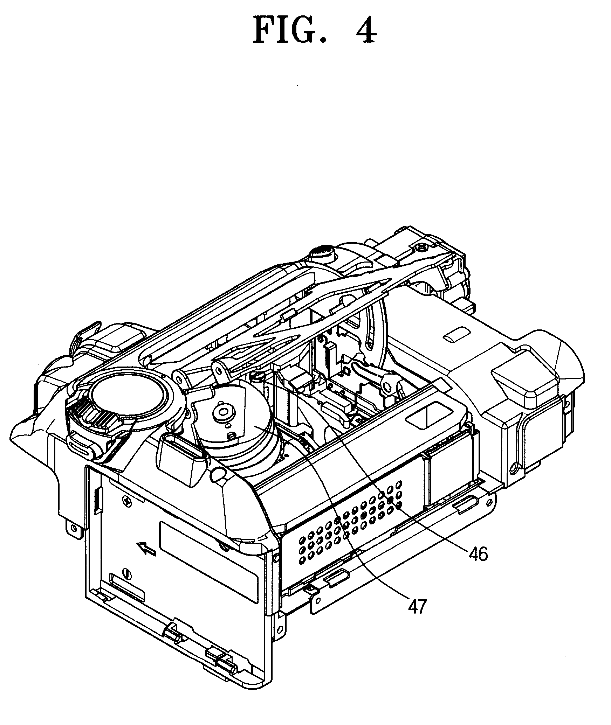

As seen in Figures 2 and 4, the camcorder unit 12 has a deck (not shown), and the deck contains a travel system adjustment member 46 and a head drum 47.

The travel system adjustment member 46 comprises a guide pole and a guide roller, and the travel system adjustment guides the magnetic tape to the head drum 47. The travel system adjustment member 46 is adjusted to more precisely guide the magnetic tape to the head drum 47. A groove is formed at one end of the travel system adjustment member 46 allowing the travel system adjustment member 46 to be rotated using a tool such as a screwdriver so that the height of the travel system adjustment member 46 is adjusted.

A known head drum 47 reads data from, or stores data to, the magnetic tape.

The digital camera unit 14 captures both moving images and still images. These captured images are stores on a recording media for output. The recording media may be a hard disk (not shown) or a memory card (not shown) or the like. The detailed description of the storage media is omitted as they are known to those having ordinary skill in the art.

A known holding band 16 is configured to extend from one side of the main body 10 to the other side. The holding band 16 keeps the user's hand on the dual cam.

Referring to Figure 2, the grip cover 20 comprises a first screw hole 22, a fastening member 24, a hook 26 and a prominence 28a and depression 28b.

Two first screw holes 22 extend through a bottom side of the grip cover 20. A screw thread is formed in the first screw hole 22 for engagement with a screw.

The fastening member 24 is inserted through the first fastening hole 22 and also through a second fastening hole 44, to mount and fix the grip cover 20 to the grip cover mount part 40. A screw is generally used as the fastening member 24.

A hook 26 is located on one side of the grip cover 20 which engages the adjustment hole 42. The hook 26 and the adjustment hole 42 are provided in corresponding numbers for engagement with one another.

The prominence 28a and depression 28b are located integrally on an outside surface of grip cover 20. The prominence 28a and depression 28b are configured in the form of embossing ribs as shown in Figure 1. However, any other suitable shapes and patterns may be used.. Colour and material of the grip cover 20 may also be changed depending on user's needs.

The prominence 28a and depression 28b contacts a user's hand when the user holds the dual cam. The gaps between the prominence 28a and the depression 28b allows air to flow preventing perspiration. Preferably, for improved ventilation, the prominence 28a and depression 28b may comprise a plurality of regularly-spaced ribs.

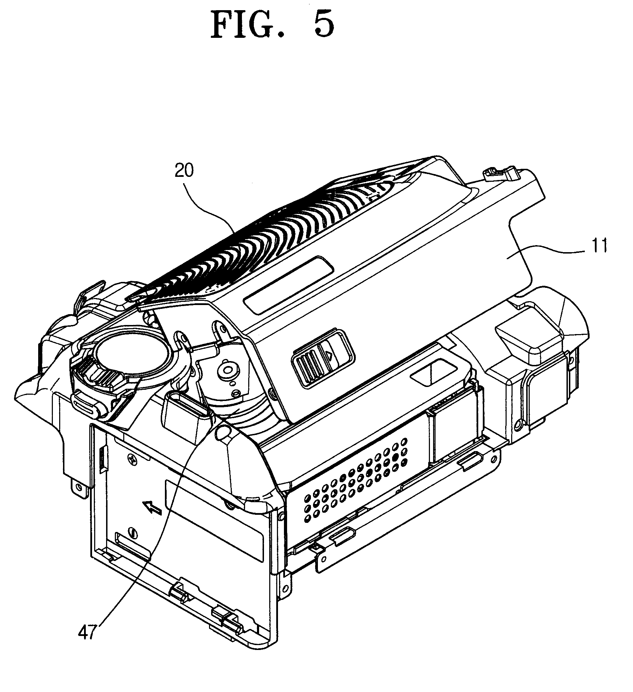

The deck door 11 has a grip cover mount part 40, and the grip cover mount part 40 comprises the adjustment hole 42 and the second fastening hole 44. The deck door 11 is movably positioned on the side of the main body 10, and is capable of being opened and closed as shown in Figure 5. Accordingly, a user can insert and remove the magnetic tape to/from the camcorder unit 12 when the deck door 11 is open.

The grip cover mount part 40 is formed in a recess on one side of the deck door 11 and corresponds to the grip cover 20 such that the grip cover 20 may be easily attached and lies flush with the door 11. The adjustment hole 42 is provided on the grip cover mount part 40 for adjusting the travel system adjustment member 46 from the outside.

As stated above, the adjustment hole 42 extends through the grip cover mount part 40 so that the travel system adjustment member 46 is adjustable from the outside. Additionally, the adjustment hole 42 is configured to correspond to the counterpart hook 26 for engagement.

The second screw hole 44 is formed on the grip cover mount part 40, and corresponds with the first screw hole 22, so that fastening member 24 is inserted in the second screw hole 44. A screw thread is formed along the second screw hole 44.

Hereinafter, the operation of the present invention will be in detail described.

A dual cam according to an embodiment of the present invention has a travel system adjustment member for adjusting the travel system after assembly. The travel system adjustment member 46 is adjusted via the hook hole 42 on the grip cover mount part 40. A groove is formed in the upper part of the travel system adjustment member 46, and the travel system adjustment member 46 is rotated using the groove by a tool such as a conventional screwdriver to adjust the height thereof.

The travel system is adjusted as stated above, and the grip cover 20 is mounted to the grip cover mount part 40. The hook 26 is engaged within the adjustment hole 42. The fastening member 24 is inserted to the first screw hole 22 and the second screw hole 44 so that the grip cover 20 is mounted and fixed to the grip cover mount part 40. The adjustment hole 42 is then covered with the grip cover 20. Accordingly, the press-fit of rubber packing required on known apparatus is not required, and the rubber packing member is omitted. Additionally, if it is necessary for the travel system to require future repairs or maintenance, known press-fit packing will not need to be forcedly removed. Therefore, embodiments of the present invention provide a dual cam that may easily adjust a travel system through the adjustment hole 42 by unfastening fastening member 24.

A user holds the dual cam in one hand during operation. This often lasts more than one hour. If a user holds the dual cam for a long time, the user's hand often perspires. The dual cam has prominences 28a and depressions 28b on grip cover 20 to generate a space between the user's hand and the grip cover 20 allowing air to flow therebetween. Accordingly, discomfort caused by perspiration is removed.

As described above, the grip cover 20 covers the adjustment hole 42 which adjusts the travel system, and therefore, the known press-fitting process of rubber packing is omitted and the production process is simplified. Additionally, the travel system is easily adjusted since only grip cover 20 needs to be removed.

Even when a user holds an image photographing apparatus for a long time, spaces formed between the prominences 28a and depressions 28b on the grip cover, allow air to circulate and prevent a user's hand from perspiring.

## Claims

1. A camera apparatus (10) comprising a body, **characterised by** a removable grip (20) arranged to be in contact with the palm of a user's hand during operational use of the camera (10).

2. A camera apparatus (10) according to claim 1, wherein the removable grip (20) comprises a plurality of ribs (28a,28b).

3. A camera apparatus (10) according to either one of claim 1 or 2, comprising a user-operable adjustment input device (46) located behind the mounted position of the grip (20) such that the adjustment input device (46) becomes accessible upon removal of the grip (20).

4. A camera apparatus (10) according to claim 3, including a tape deck for recording captured video, wherein the user-operable adjustment input device (46) is a track adjustment device for the tape deck.

5. An image photographing apparatus comprising:
a main body having an outside surface;
a deck unit for recording and reproducing information to a magnetic tape;
a grip cover removeably engaged with the outside surface of the main body for facilitating gripping of the apparatus by a user's hand; and
a plurality of prominences and depressions disposed on an outside surface of the grip cover, providing a gap between the user's hand and the outside surface of the grip cover for facilitating air flow.

6. The image photographing apparatus of claim 5, wherein the prominences and depressions comprise a plurality of ribs.

7. The image photographing apparatus of claim 5, wherein the main body comprises a movable deck door for insertion and withdrawal of the magnetic tape, and the grip cover is mounted to one side of the deck door.

8. The image photographing apparatus of claim 7, wherein at least one adjustment hole extends through the deck door to adjust a magnetic tape travel system of the deck unit, and the adjustment hole is covered and uncovered by the grip cover.

9. The image photographing apparatus of claim 8, wherein the grip cover comprises:
a hook disposed thereon for engagement with the adjustment hole; and
a screw hole for releasably attaching the grip cover to the deck door by a fastener.

10. The image photographing apparatus of claim 5, wherein at least one adjustment hole extends through the main body to adjust a magnetic tape travel system of the deck unit, and the adjustment hole may be covered or uncovered by the grip cover.

11. The image photographing apparatus of claim 10, wherein the grip cover comprises:
a hook disposed thereon for engagement with the adjustment hole; and
a screw hole for releasably attaching the grip cover to the deck door by a fastener.

12. The image photographing apparatus according to claim 5, wherein the main body of the image photographing apparatus comprises a first camera unit for photographing a movable image; and a second camera unit for photographing a still image.

13. An image photographing apparatus comprising:
a main body having an outside surface, the main body of the image photographing apparatus comprises a first camera unit for photographing a movable image; and a second camera unit for photographing a still image;
a deck unit for recording and reproducing information to a magnetic tape; a grip cover engaged with the outside surface of the main body for facilitating gripping of the apparatus by a user's hand; and
a plurality of prominences and depressions disposed on an outside surface of the grip cover, providing a gap between the user's hand and the outside surface of the grip cover for facilitating air flow.

14. The image photographing apparatus of claim 13, wherein the prominences and depressions comprise a plurality of ribs.

15. The image photographing apparatus of claim 13, wherein the main body comprises a movable deck door for insertion and withdrawal of the magnetic tape, and the grip cover is mounted to one side of the deck door.

16. The image photographing apparatus of claim 15, wherein at least one adjustment hole extends through the deck door to adjust a magnetic tape travel system of the deck unit, and the adjustment hole is covered and uncovered by the grip cover.

17. The image photographing apparatus of claim 16, wherein the grip cover comprises:
a hook disposed thereon for engagement with the adjustment hole; and
a screw hole for releasably attaching the grip cover to the deck door by a fastener.

18. The image photographing apparatus of claim 13, wherein at least one adjustment hole extends through the main body to adjust a magnetic tape travel system of the deck unit, and the adjustment hole may be covered or uncovered by the grip cover.

19. The image photographing apparatus of claim 18, wherein the grip cover comprises:
a hook disposed thereon for engagement with the adjustment hole; and
a screw hole for releasably attaching the grip cover to the deck door by a fastener.

20. An image photographing apparatus comprising:
a main body having an outside surface;
a deck unit for recording and reproducing information to a magnetic tape;
a deck door for insertion and withdrawal of the magnetic tape within the deck unit, a grip cover is mounted to one side of the deck door, the deck door and the grip cover are movably positionable with respect to the outside surface of the main body for facilitating gripping of the apparatus by a user's hand; and
a plurality of prominences and depressions disposed on an outside surface of the grip cover, providing a gap between the user's hand and the outside surface of the grip cover for facilitating air flow.

21. The image photographing apparatus of claim 20, wherein the prominences and depressions comprise a plurality of ribs.

22. The image photographing apparatus of claim 20, wherein the deck door has a gripping cover mounting part on a side opposite the gripping cover side, the gripping cover mounting part has at least one adjustment hole extending therethrough for adjusting a magnetic tape travel system of the deck unit, and the adjustment hole is covered and uncovered by the grip cover.

23. The image photographing apparatus of claim 22, wherein the grip cover comprises:
a hook disposed thereon for engagement with the adjustment hole; and
a screw hole for releasably attaching the grip cover to the deck door by a fastener.
